# EUROPEAN PATENT APPLICATION

(11) **EP 4 354 575 A1**
(43) Date of publication of application: **17.04.2024**
(21) Application number: 22885553.2
(22) Date of filing: 27.09.2022
(51) Int. Cl.: H01M 10/0525

(54) **LITHIUM ION BATTERY AND SEPARATOR THEREOF**

(30) Priority: 28.10.2021 CN 202122614017 U
(71) Applicant: Contemporary Amperex Technology Co., Limited, Ningde, Fujian 352100 (CN)
(72) Inventor: DING, Linting, Ningde, Fujian 352100 (CN); ZHANG, Haiming, Ningde, Fujian 352100 (CN); TANG, Daichun, Ningde, Fujian 352100 (CN); SHI, Chunmei, Ningde, Fujian 352100 (CN)
(74) Representative: Rowlands, Stuart Michael
(86) International application number: PCT/CN2022/121693
(87) International publication number: WO 2023/071667

(57) **Abstract**

The present application relates to a lithium ion battery and a separator (10) thereof. The separator (10) comprises: a base film (100); and a coating (200), which covers the surface of the base film (100), wherein the coating (200) comprises a main body (210), and an edge portion (220), which is arranged on the periphery of the main body (210), the thickness of the edge portion (220) being greater than that of the main body (210), and the edge portion (220) being provided with several patterns (230) arranged at intervals. The lithium ion battery comprises: a positive electrode sheet (20); a negative electrode sheet (30); and the separator (10), which is arranged between the positive electrode sheet (20) and the negative electrode sheet (30). By means of the lithium ion battery and the separator (10) thereof, the rigidity of the edge portion (220) of the separator (10) is better improved, the probability of folding of the separator (10) in a winding and assembling process is effectively reduced, and the improvement of product yield is facilitated.

## Description

### Cross-Reference to Related Applications

The present application refers to Chinese patent application no. 202122614017.4 filed on October 28, 2021 and entitled "LITHIUM ION BATTERY AND SEPARATOR THEREOF", which is incorporated herein by reference in its entirety.

### Technical Field

The present application relates to the technical field of lithium batteries, and more particularly, to a lithium ion battery and a separator thereof.

### Background Art

A wound lithium ion battery comprises a case, a cell, and electrolyte, the electrolyte being filled in the case, and the cell being accommodated in the case filled with the electrolyte. The cell comprises a positive electrode plate, a separator and a negative electrode plate, which are stacked. In general, the positive electrode plate and the negative electrode plate are prepared first, and then the positive electrode plate, the separator and the negative electrode plate are wound and assembled into the cell.

Since the separator has small thickness and low rigidity, the separator is easy to fold during the winding and assembly process, which has a potential safety hazard and results in a decrease in the yield of lithium ion batteries.

### Summary of the Invention

In view of this, the present application discloses a lithium ion battery and a separator thereof.

The separator comprises a base film and a coating which covers a surface of the base film. The coating comprises a main body and an edge portion arranged on the periphery of the main body, the edge portion having a greater thickness than the main body, and the edge portion being provided with several patterns arranged at intervals. In the separator described above, the thickness of the edge portion is greater than that of the main body, so that the rigidity of the edge portion of the separator is better improved to effectively reduce the probability of the separator being folded during the winding and assembly process, which is conducive to increasing the product yield. Moreover, gaps between the adjacent patterns can be used as accommodating spaces in which electrolyte can be stored, thereby preventing the occurrence of lithium precipitation in a stress concentration region due to insufficient electrolyte.

In one of the embodiments, the ratio of the thickness of the edge portion to the thickness of the main body ranges from 1.2 to 1.6. This configuration can effectively improve the rigidity of the edge portion and also better guarantee the bonding effect of the separator.

In one of the embodiments, the thickness of the edge portion ranges from 4 µm to 8 µm, and the thickness of the main body ranges from 3 µm to 5 µm. This configuration can effectively improve the rigidity of the edge portion and also better guarantee the bonding effect of the separator.

In one of the embodiments, the ratio of the width of the edge portion to the width of the main body ranges from 0.17 to 0.33. This configuration can effectively improve the rigidity of the edge portion, and can also effectively fill the redundant gaps in the electrode plate in a thinned region to reduce the occurrence of lithium precipitation in the thinned region due to electrolyte bridge cutoff.

In one of the embodiments, the width of the edge portion ranges from 10 mm to 20 mm, and the width of the main body ranges from 60 mm to 120 mm. This configuration can effectively improve the rigidity of the edge portion, and can also effectively fill the redundant gaps in the electrode plate in a thinned region to reduce the occurrence of lithium precipitation in the thinned region due to electrolyte bridge cutoff.

In one of the embodiments, the edge portion comprises a first edge portion and a second edge portion which are respectively arranged on two sides of the main body, the first edge portion and/or the second edge portion being provided with several patterns arranged at intervals. Since the edge portion is provided with the several patterns arranged at intervals, the gaps between the adjacent patterns can be used as accommodating spaces in which the electrolyte can be stored, thereby preventing the occurrence of lithium precipitation in a stress concentration region due to insufficient electrolyte.

In one of the embodiments, the pattern is at least one of a stripe-shaped pattern, a grid-shaped pattern and a pit-shaped pattern. In the pattern of the above type, certain hollow regions can be reserved in the pattern so as to effectively store the electrolyte, thereby preventing the occurrence of lithium precipitation in a stress concentration region of the edge portion of the coating due to insufficient electrolyte.

In one of the embodiments, the base film comprises a first surface and a second surface, and the coating covers the first surface and/or the second surface. This configuration can effectively protect the first surface and/or the second surface of the base film to prevent the base film from being exposed and thus damaged.

A lithium ion battery comprises a positive electrode plate, a negative electrode plate, and the separator described above arranged between the positive electrode plate and the negative electrode plate. In the lithium ion battery described above, the rigidity of the edge portion of the separator is better improved to effectively reduce the probability of the separator being folded during the winding and assembly process, which is conducive to increasing the product yield.

In one of the embodiments, the lithium ion battery further comprises an insulating layer arranged at an edge of the positive electrode plate and/or an edge of the negative electrode plate. By means of providing the insulating layer, it is possible to reduce the occurrence of internal short circuit due to the separator being pierced by burrs on the section of the electrode plate.

### Brief Description of the Drawings

In order to illustrate the technical solutions in the embodiments of the present application or in the prior art more clearly, the drawings required in the description of the embodiments or in the prior art will be described briefly below. It will be apparent that the drawings described below merely show the embodiments of the present application, and for those of ordinary skilled in the art, other drawings can be obtained from the disclosed drawings without involving any inventive effort.
FIG. 1 is a partial schematic diagram of a cell according to an embodiment;
FIG. 2 is a top view of an edge portion of a separator having stripe-shaped patterns;
FIG. 3 is a top view of an edge portion of a separator having grid-shaped patterns; and
FIG. 4 is a top view of an edge portion of a separator having pit-shaped patterns.

### Reference numerals:

10. separator; 20. positive electrode plate; 30. negative electrode plate; 100. base film; 101. first surface; 102. second surface; 200. coating; 210. main body; 220. edge portion; 221. first edge portion; 222. second edge portion; 230. pattern; 231. accommodating space.

### Detailed Description of Embodiments

In order to make the above objectives, features and advantages of the present application more apparent and readily understood, the particular embodiments of the present application will be described in detail below with reference to the accompanying drawings. In the following description, many specific details are set forth in order to provide a thorough understanding of the present application. However, the present application can be implemented in many other ways different from those described herein, and those skilled in the art could make similar improvements without departing from the essence of the present application. Therefore, the present application is not limited by the particular embodiments disclosed below.

In the description of the present application, it should be understood that the orientation or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", etc. are based on the orientation or positional relationships shown in the accompanying drawings and are merely for ease of description of the present application and simplification of the description, rather than indicating or implying that the devices or elements referred to must have a specific orientation or be constructed and operated in the specific orientation, and thus cannot be construed as limiting the present application.

In addition, the terms "first" and "second" are used for descriptive purposes only, and cannot be construed as indicating or implying relative importance or implicitly indicating the number of technical features indicated. Therefore, the features defined with "first" and "second" may explicitly or implicitly include at least one of the features. In the description of the present application, the phrase "a plurality of" means at least two, such as two, three, etc., unless otherwise specifically defined.

In the present application, unless otherwise explicitly specified or defined, the terms such as "mounting", "connection", "connected" and "fixing" should be interpreted in a broad sense, for example, may be a fixed connection, a detachable connection, or integration; or may be a mechanical connection or an electrical connection; or may be a direct connection or an indirect connection via an intermediate medium, or may be communication between interiors of two elements or interaction between the two elements, unless otherwise specifically defined. For those of ordinary skills in the art, the specific meanings of the foregoing terms in the present application may be understood according to specific circumstances.

In the present application, unless otherwise explicitly specified and defined, the expression of a first feature being "on" or "under" a second feature may be the case where the first feature is in direct contact with the second feature, or the first feature is in indirect contact with the second feature via an intermediate medium. Moreover, the expression of the first feature being "over", "above" and "on top of" the second feature may be the case where the first feature is directly above or obliquely above the second feature, or only means that the level of the first feature is higher than the second feature. The expression of the first feature being "underneath", "below" and "beneath" the second feature may be the case where the first feature is directly below or obliquely below the second feature, or only means that the level of the first feature is lower than the second feature.

It should be noted that when an element is referred to as being "fixed to" or "arranged on" a further element, it may be directly on the further element, or there may be an intermediate element. When an element is referred to as being "connected" to a further element, it may be directly connected to the further element, or there may be an intermediate element. The terms "vertical", "horizontal", "upper", "lower", "left", "right" and similar expressions used herein are for illustrative purposes only but do not represent any unique implementation.

At present, lithium ion batteries, as a type of environmentally friendly battery, have the advantages of high energy density, high operating voltage, high safety performance, long service life, etc., and have been widely used in electronic devices, such as mobile phones and digital cameras, and electric vehicles. With the increasing demand for green energy, environmental protection, energy storage and utilization, etc., the lithium ion batteries have become the bottleneck to the development of new energy.

Although there are many types of lithium ion battery, wound lithium ion batteries have a wide range of applications. A wound lithium ion battery comprises a case, a cell, and electrolyte, the electrolyte being filled in the case, and the cell being accommodated in the case filled with the electrolyte.

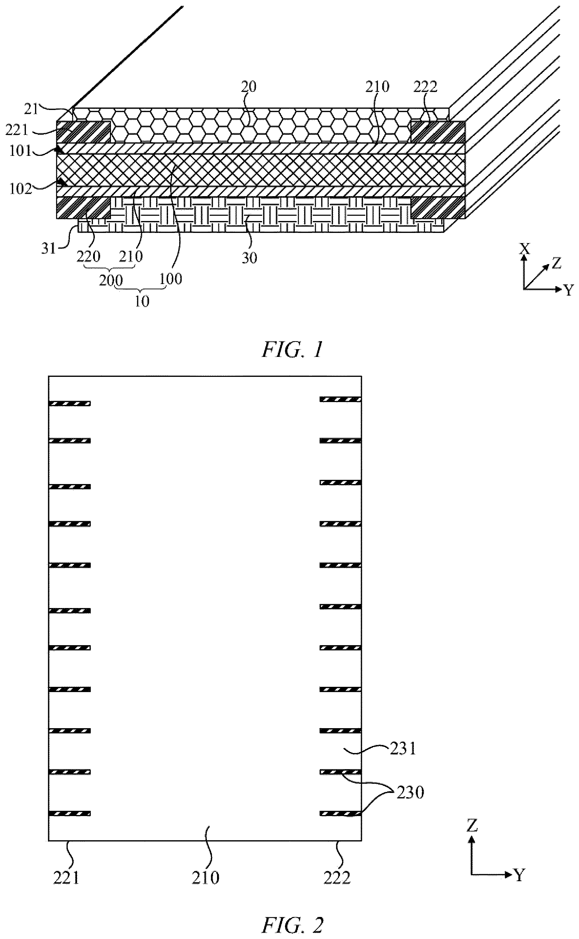

As shown in FIG. 1, the cell comprises a positive electrode plate 20, a separator 10 and a negative electrode plate 30, which are stacked. In general, the positive electrode plate 20 and the negative electrode plate 30 need to be prepared first, then the positive electrode plate 20, the separator 10 and the negative electrode plate 30 are wound and assembled into a cell, and then the cell is subjected to the subsequent manufacturing procedures, such as hot and cold pressing, formation, shaping, and capacity test, to form a finished lithium ion battery.

In general, in a preparation process of an electrode plate, the surface of the electrode plate is coated with an active material layer and an insulating material, and then the electrode plate is punched. There will be many burrs formed on the section when the electrode plate is punched. Since the separator 10 has small thickness and low rigidity, the separator 10 is easily pierced by the burrs on the section during the winding and assembly process to cause micro-short circuit and side reactions inside the cell, resulting in a decrease in the yield of lithium ion batteries. Moreover, since the separator 10 has small thickness and low rigidity, the separator 10 is easy to fold during the winding and assembly process, resulting in a decrease in the yield of lithium ion batteries.

In view of the above problem, some solutions provide a concept of applying an insulating tape onto the burrs on the section so as to prevent the separator 10 from being pierced by the burrs on the end face. Although the risk of the separator 10 being pierced by the burrs on the end face may be reduced, the complexity of the process is increased to greatly reduce the production efficiency. More importantly, the problem of the separator 10 being easy to fold during the winding and assembly process is not mitigated. Therefore, how to effectively prevent the separator 10 from being folded during the winding and assembly process is an urgent problem to be solved.

In view of the above considerations, in order to solve the problem of the separator 10 being easy to fold during the winding and assembly process, the inventors have designed a separator 10 through research.

Referring to FIG. 1, in an embodiment, the separator 10 comprises a base film 100 and a coating 200, the coating 200 covering a surface of the base film 100. Referring to FIGS. 2-4, the coating 200 comprises a main body 210 and an edge portion 220 arranged on the periphery of the main body 210, the edge portion 220 having a greater thickness than the main body 210, and the edge portion 220 being provided with several patterns 230 arranged at intervals.

The inventors have notice that, in the case where only the thickness of the edge portion 220 is greater than that of the main body 210 but the edge portion 220 is not provided with several patterns 230 arranged at intervals, the separator 10 will have local stress concentration due to local thickening, and lithium precipitation may occur in the stress concentration region due to insufficient electrolyte.

It should be noted that lithium precipitation means that metallic lithium is precipitated on a surface of an electrode plate and forms a layer of gray substance on the surface of the electrode plate. Lithium precipitation not only causes performance degradation of the battery to greatly shorten the cycle life, but also limits the fast-charging capacity of the battery, and may cause combustion, explosion and other consequences.

In the above configuration, the thickness of the edge portion 220 is greater than that of the main body 210, so that the rigidity of the edge portion 220 of the separator 10 is better improved to effectively reduce the probability of the separator 10 being folded during the winding and assembly process, which is conducive to increasing the product yield. Moreover, gaps between the adjacent patterns 230 can be used as accommodating spaces 231, and electrolyte can be stored in the accommodating spaces 231, thereby preventing the occurrence of lithium precipitation in a stress concentration region due to insufficient electrolyte.

Herein, t'e 'thickness' refers to the dimension in the X-direction shown in FIG. 1. Accordingly, the 'width' refers to the dimension in the Y-direction shown in FIG. 1, and the 'length' refers to the dimension in the Z-direction shown in FIG. 1.

In a specific embodiment, the coating 200 is a ceramic layer. The ceramic layer may be made of pure alumina or zirconia, or a mixture of alumina and zirconia.

As shown in FIG. 1, the base film 100 comprises a first surface 101 and a second surface 102, and the coating 200 covers the first surface 101 and/or the second surface 102.

Specifically, in an embodiment, referring to FIG. 1, the coating 200 only covers the first surface 101. In this embodiment, the second surface 102 of the base film 100 may be covered with another insulating layer lower in cost. This configuration can effectively protect the surface of the base film 100 and effectively reduce the cost.

In another embodiment, referring to FIG. 1, the coating 200 only covers the second surface 102. In this embodiment, the first surface 101 of the base film 100 may be covered with another insulating layer lower in cost. This configuration can effectively protect the surface of the base film 100 and effectively reduce the cost.

In yet another embodiment, referring to FIG. 1, the coating 200 covers both the first surface 101 and the second surface 102. This configuration can effectively protect both surfaces of the base film 100 to prevent the base film 100 from being exposed and thus damaged.

In an embodiment as shown in FIG. 1, the edge portion 220 comprises a first edge portion 221 and a second edge portion 222, the first edge portion 221 and the second edge portion 222 being respectively arranged on two sides of the main body 210.

It can be understood that the configuration of the edge portions 220 on both sides of the main body 210 and the thickening of the edge portion 220 are conducive to maintaining the structural stability of the separator 10.

In this embodiment, the first edge portion 221 and the second edge portion 222 have the same thickness. The two edge portions 220 are configured to have the same thickness, which facilitates the machining and is also conducive to maintaining the structural stability of the separator 10 to achieve better structural stability when the separator 10 and the positive and negative electrode plates 30 are stacked.

In other embodiments, the first edge portion 221 and the second edge portion 222 may have different thicknesses. For example, the thickness of the first edge portion 221 is greater than that of the second edge portion 222, or the thickness of the second edge portion 222 is greater than that of the first edge portion 221.

In this embodiment, as shown in FIG. 1, the first edge portion 221, the second edge portion 222, and the main body 210 are integrally formed, and has high mechanical strength and good integrity. In other embodiments, the first edge portion 221, the second edge portion 222 and the main body 210 may be of a separated structure.

As shown in FIGS. 1 and 2, several patterns 230 arranged at intervals are formed in the first edge portion 221 and/or the second edge portion 222.

It can be understood that since the edge portion 220 is provided with several patterns 230 arranged at intervals, the gaps between the adjacent patterns 230 can be used as accommodating spaces 231, and electrolyte can be stored in the accommodating spaces 231, thereby preventing lithium precipitation in the stress concentration region due to insufficient electrolyte.

Specifically, in an embodiment, as shown in FIG. 1, only the first edge portion 221 is provided with several patterns 230 arranged at intervals. In this configuration, the gaps between the adjacent patterns 230 can be used as accommodating spaces 231, and electrolyte can be stored in the accommodating spaces 231, thereby preventing lithium precipitation in a stress concentration region of the first edge portion 221 due to insufficient electrolyte.

In another embodiment, as shown in FIG. 1, only the second edge portion 222 is provided with several patterns 230 arranged at intervals. In this configuration, the gaps between the adjacent patterns 230 can be used as accommodating spaces 231, and electrolyte can be stored in the accommodating spaces 231, thereby preventing lithium precipitation in a stress concentration region of the second edge portion 222 due to insufficient electrolyte.

In yet another embodiment, as shown in FIG. 1, both the first edge portion 221 and the second edge portion 222 are provided with several patterns 230 arranged at intervals. In this configuration, the gaps between the adjacent patterns 230 can be used as accommodating spaces 231, and electrolyte can be stored in the accommodating spaces 231, thereby effectively preventing lithium precipitation in stress concentration regions of the first edge portion 221 and the second edge portion 222 due to insufficient electrolyte.

In the embodiment shown in FIG. 1, the several patterns 230 arranged at intervals are formed on the edge portion 220 of the coating 200 by means of embossing with a knurling roll after the surface of the base film 100 is coated with the coating 200 and prior to the coating 200 is dried. In other embodiments, the several patterns 230 arranged at intervals may be formed by coating many times or other methods.

As shown in FIGS. 2-4, the pattern 230 is in at least one of a stripe-shaped pattern, a grid-shaped pattern and a pit-shaped pattern. In the pattern 230 of the above type, certain hollow regions can be reserved in the pattern 230 so as to effectively store electrolyte, thereby preventing lithium precipitation in a stress concentration region of the edge portion 220 of the coating 200 due to insufficient electrolyte.

In an embodiment as shown in FIG. 2, the pattern 230 is stripe-shaped. In this embodiment, the edge portion 220 extends in a first direction (i.e., the Z-direction shown in FIG. 2), each stripe extends in a second direction (i.e., the Y-direction shown in FIG. 2) different from the first direction, and the several stripes are arranged at intervals in the first direction.

In this configuration, the gap between every two adjacent stripes may form an accommodating space 231, and thus the edge portion 220 of the coating 200 is provided with multiple accommodating spaces 231 arranged at intervals so as to effectively store electrolyte.

In this embodiment, the stripe is straight. In other embodiments, the stripe may also be wavy or in other irregular shapes.

In this embodiment, the width of the stripe is less than that of the edge portion 220, and the length of the stripe is less than that of the edge portion 220, thereby avoiding the situation that the rigidity the separator 10 is unable to meet the usage requirements caused by the affection to the thickness of the edge portion 220 due to the inappropriate width and length of the stripes.

It should be noted herein that the second direction is substantially perpendicular to the first direction in this embodiment. In other embodiments, the second direction may not be substantially perpendicular to the first direction, as long as the second direction is different from the first direction.

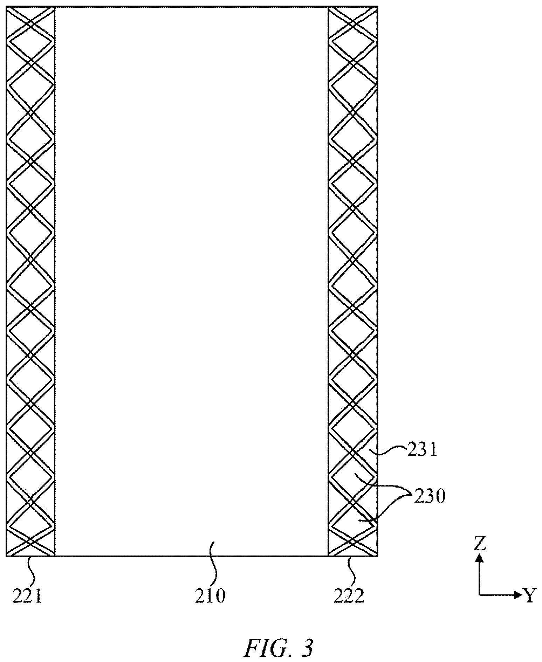

In another embodiment as shown in FIG. 3, the pattern 230 is grid-shaped. In this embodiment, the edge portion 220 extends in the first direction (i.e., the Z-direction shown in FIG. 3), and several grids are arranged at intervals in the first direction.

In this configuration, the gap between every two adjacent grids may form an accommodating space 231, and thus the edge portion 220 of the coating 200 is provided with multiple accommodating spaces 231 arranged at intervals so as to effectively store electrolyte.

In this embodiment, the grid is rhombic. In other embodiments, the grid may also be pentagonal, hexagonal or in other irregular shapes.

In this embodiment, the width of the grid is less than that of the edge portion 220, and the length of the grid is less than that of the edge portion 220, thereby avoiding the situation that the rigidity of the separator 10 is unable to meet the usage requirements caused by the affection to the thickness of the edge portion 220 due to the inappropriate width and length of the grid.

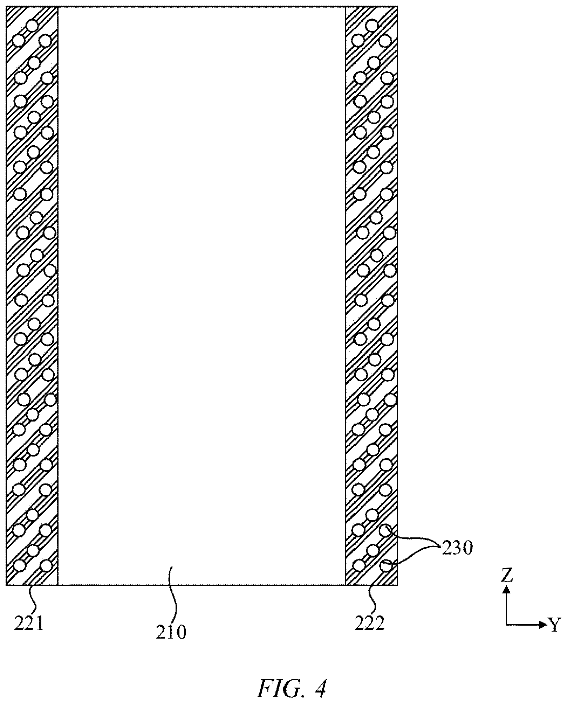

In yet another embodiment as shown in FIG. 4, the pattern 230 is pit-shaped. In this embodiment, the edge portion 220 extends in the first direction (i.e., the Z-direction shown in FIG. 4), each pit is recessed downward from the edge portion 220, and several pits are arranged at intervals in the first direction.

In this configuration, each pit can be used as an accommodating space 231, and thus the edge portion 220 of the coating 200 is provided with multiple accommodating spaces 231 arranged at intervals so as to effectively store electrolyte.

In this embodiment, the pit is round. In other embodiments, the pit may also be oval, rectangular or in other irregular shapes.

In this embodiment, the width of the pit is less than that of the edge portion 220, and the length of the pit is less than that of the edge portion 220, thereby avoiding the situation that the rigidity of the separator 10 is unable to meet the usage requirements caused by the affection to the thickness of the edge portion 220 due to the inappropriate width and length of the pit.

In other embodiments not shown in FIG. 1, the pattern 230 may also be any combination of at least two of the stripe-shaped pattern, the grid-shaped pattern and the pit-shaped pattern.

For example, the pattern 230 may be a combination of the stripe-shaped pattern and the grid-shaped pattern; or the pattern 230 may be a combination of the stripe-shaped pattern and the pit-shaped pattern; or the pattern 230 may be a combination of the grid-shaped pattern and the pit-shaped pattern; or the pattern 230 may be a combination of the stripe-shaped pattern, the grid-shaped pattern and the pit-shaped pattern.

The inventors have noticed that the thickness of the edge portion 220 has an important influence on the rigidity and the folding probability of the separator 10. If the edge portion 220 is too thin, the separator 10 has insufficient rigidity, and thus the separator 10 is easy to fold during the winding and assembly process; and if the edge portion 220 is too thick, the separator 10 has reduced effective bonding area, resulting in a poor bonding effect between the separator 10 and the electrode plate.

In view of the above considerations, the inventors have found through research that in the embodiment shown in FIG. 1, the ratio of the thickness of the edge portion 220 to the thickness of the main body 210 ranges from 1.2 to 1.6.

In an embodiment, the thickness of the edge portion 220 ranges from 4 µm to 8 µm, and the thickness of the main body 210 ranges from 3 µm to 5 µm.

In this configuration, the thickening ratio of the edge portion 220 relative to the main body 210 ranges from 20% to 60%, and this thickening ratio can effectively improve the rigidity of the edge portion 220 and also better guarantee the bonding effect of the separator 10.

The thickening ratio of the edge portion 220 relative to the main body 210 herein is defined as the percentage of the difference between the thickness of the edge portion 220 and the thickness of the main body 210 to the thickness of the main body 210.

The inventors have also noticed that the width of the edge portion 220 also has an important influence on the rigidity and the folding probability of the separator 10. If the edge portion 220 is too wide, the separator 10 has more concentrated local stress and has redundant material consumption; and if the edge portion 220 is too narrow, the separator 10 has insufficient rigidity, and thus the separator 10 is easy to fold during the winding and assembly process.

In view of the above considerations, the inventors have found through further research that in the embodiment shown in FIG. 1, the ratio of the width of the edge portion 220 to the width of the main body 210 ranges from 0.17 to 0.33.

In this configuration, the width of the edge portion 220 relative to the main body 210 is appropriate and in the range of width ratio that can effectively improve the rigidity of the edge portion 220, and is also equivalent to the width of the thinned region of the electrode plate, such that the redundant gap in the electrode plate in the thinned region can be effectively filled to achieve a liquid retention effect, thereby reducing the occurrence of lithium precipitation in the thinned region due to electrolyte bridge cutoff.

In this embodiment, the width of the edge portion 220 ranges from 10 mm to 20 mm, and the width of the main body 210 ranges from 60 mm to 120 mm.

In order to study in detail the influence of the thickness and width of the edge portion 220 on the rigidity and the folding probability of the separator 10, the inventors have set up multiple comparative experiments for testing and comparison of relevant parameters of the separator 10.

In the above comparative experiments, the inventors have set up comparative example 1, comparative example 2, and examples 1-11. In the above comparative examples and the examples, the products are prepared by the same method specifically as follows.
(1) A base film 100 was conventionally coated with a coating 200 to form a separator 10 having a coating 200 with a thickness of 3 µm, and the separator was dried in an oven and sprayed with polyvinylidene fluoride to form a finished separator 10. The separator 10 and positive and negative electrode plates 30 were wound and subjected to hot and cold pressing, formation, shaping, capacity tests and other procedures to obtain a lithium ion battery product of comparative example 1.
(2) The base film 100 was conventionally coated with the coating 200 and then pressed by means of an embossing roll to obtain a ceramic layer having grid-shaped patterns, the ceramic layer having an edge width of 15 mm, a thickness of the main body 210 of 3 µm, and an edge thickness of 4.2 µm, and the ceramic layer was dried in an oven and sprayed with polyvinylidene fluoride to obtain a finished separator 10. The separator 10 and positive and negative electrode plates 30 were wound and subjected to hot and cold pressing, formation, shaping, capacity tests and other procedures to obtain a lithium ion battery product of example 2.
(3) The lithium ion battery products of comparative example 2 and examples 1-11 are also prepared according to the steps in example 2.

In the above comparative experiments, the edge portion 220 is made of the same material and under the same experimental conditions. The differences between the comparative examples and the examples are as follows:
comparative example 1: the edge portion 220 is not provided with patterns 230, and the edge portion 220 is not thickened relative to the main body 210;
comparative example 2: the edge portion 220 is not provided with patterns 230, the thickening ratio of the edge portion 220 relative to the main body 210 is 40%, and the edge portion 220 has a width of 15 mm;
example 1: the pattern 230 of the edge portion 220 is stripe-shaped, the thickening ratio of the edge portion 220 relative to the main body 210 is 40%, and the edge portion 220 has a width of 15 mm;
example 2: the pattern 230 of the edge portion 220 is grid-shaped, the thickening ratio of the edge portion 220 relative to the main body 210 is 40%, and the edge portion 220 has a width of 15 mm;
example 3: the pattern 230 of the edge portion 220 is pit-shaped, the thickening ratio of the edge portion 220 relative to the main body 210 is 40%, and the edge portion 220 has a width of 15 mm;
example 4: the pattern 230 of the edge portion 220 is grid-shaped, the thickening ratio of the edge portion 220 relative to the main body 210 is 10%, and the edge portion 220 has a width of 15 mm;
example 5: the pattern 230 of the edge portion 220 is grid-shaped, the thickening ratio of the edge portion 220 relative to the main body 210 is 20%, and the edge portion 220 has a width of 15 mm;
example 6: the pattern 230 of the edge portion 220 is grid-shaped, the thickening ratio of the edge portion 220 relative to the main body 210 is 60%, and the edge portion 220 has a width of 15 mm;
example 7: the pattern 230 of the edge portion 220 is grid-shaped, the thickening ratio of the edge portion 220 relative to the main body 210 is 100%, and the edge portion 220 has a width of 15 mm;
example 8: the pattern 230 of the edge portion 220 is grid-shaped, the thickening ratio of the edge portion 220 relative to the main body 210 is 40%, and the edge portion 220 has a width of 5 mm;
example 9: the pattern 230 of the edge portion 220 is grid-shaped, the thickening ratio of the edge portion 220 relative to the main body 210 is 40%, and the edge portion 220 has a width of 10 mm;
example 10: the pattern 230 of the edge portion 220 is grid-shaped, the thickening ratio of the edge portion 220 relative to the main body 210 is 40%, and the edge portion 220 has a width of 20 mm;
example 11: the pattern 230 of the edge portion 220 is grid-shaped, the thickening ratio of the edge portion 220 relative to the main body 210 is 40%, and the edge portion 220 has a width of 50 mm.

**Table 1**

| | Type of pattern | Thicken ing ratio/% | Width/ mm | Air permeability of thickened portion/s/100 mL | Elasticity modulus /kgf/cm2 | K value | 500-cycle capacity retention rate |
|---|---|---|---|---|---|---|---|
| Comparative example 1 | None | 0 | 0 | 178 | 573 | 0.01789 | 93.60% |
| Comparative example 2 | None | 40 | 15 | 182 | 1031 | 0.01431 | 88.60% |
| Example 1 | Stripe | 40 | 15 | 180 | 804 | 0.01521 | 93.80% |
| Example 2 | Grid | 40 | 15 | 183 | 928 | 0.01610 | 93.10% |
| Example 3 | Pit | 40 | 15 | 181 | 939 | 0.01700 | 93.00% |

As seen from the data in Table 1, comparing comparative example 2 and examples 1-3 with comparative example 1, no matter whether the edge portion 220 is provided with the patterns 230, when the thickening ratio of the edge portion 220 relative to the main body 210 is 40%, the elasticity modulus (i.e., the rigidity) of the separator 10 may be increased by 1.4 to 1.8 times, the K value decreases to 0.8 to 0.95 times, and there is no significant difference in the air permeability of the separator 10. Comparing comparative example 2 with comparative example 1, the 500-cycle capacity retention rate in comparative example 2 decreases by 5% as compared with comparative example 1, that is, in the case where the edge portion 220 is not provided with the patterns 230 but the edge portion 220 is thickened relative to the main body 210, the 500-cycle capacity retention rate decreases, which is generally caused by the excessive local stress and the insufficient electrolyte back-suction. Comparing examples 1-3 with comparative example 1, the capacity retention rates in examples 1-3 is substantially the same as that in comparative example 1.

It should be noted that, in Table 1, the thickening ratio refers to the percentage of the difference between the thickness of the edge portion 220 and the thickness of the main body 210 to the thickness of the main body 210. The elasticity modulus refers to the ratio of a stress under a unidirectional stress state to a strain in this direction. The K value refers to a battery voltage drop per unit time, and is an indicator to test the self-discharge rate of a lithium battery. The 500-cycle capacity retention rate refers to the ratio of the battery capacity tested after 500 cycles to the initial capacity.

It can be concluded from the data in Table 1: (1) no matter whether the edge portion 220 is provided with the patterns 230, the rigidity of the separator 10 can be improved, as long as the edge portion 220 is thickened relative to the main body 210; and (2) when the edge portion 220 is thickened relative to the main body 210, as compared with the case where no pattern 230 is provided, providing the patterns 230 achieves better battery capacity retention rate and is less likely to cause lithium precipitation in a stress concentration region due to insufficient electrolyte.

**Table 2**

| | Type of pattern | Thickenin g ratio /% | Width /mm | Air permeability of thickened portion /s/100 mL | Elasticity modulus /kgf/cm2 | K value | 500-cycle capacity retentio n rate |
|---|---|---|---|---|---|---|---|
| Comparative example 1 | None | 0 | 0 | 178 | 573 | 0.01789 | 93.60% |
| Example 4 | Grid | 10 | 15 | 172 | 631 | 0.01723 | 93.40% |
| Example 5 | Grid | 20 | 15 | 171 | 789 | 0.01626 | 93.30% |
| Example 2 | Grid | 40 | 15 | 178 | 928 | 0.01610 | 93.10% |
| Example 6 | Grid | 60 | 15 | 181 | 1067 | 0.01401 | 93.00% |
| Example 7 | Grid | 100 | 15 | 190 | 1346 | 0.01352 | 90.30% |

As can be seen from the data in Table 2, taking a grid-shaped pattern 230 as an example, separately comparing examples 4, 5, 2, 6 and 7 with comparative example 1, when the thickening ratio of the edge portion 220 relative to the main body 210 is 20% to 60%, there are small differences in the elasticity modulus and the K value; when the thickening ratio of the edge portion 220 relative to the main body 210 begins to decrease from 20%, as compared with comparative example 1, there is no significant difference in the elasticity modulus, and the folding resistance is poorer; and when the thickening ratio of the edge portion 220 relative to the main body 210 begins to increase from 60%, the 500-cycle capacity retention rate slightly decreases.

It can be concluded from the data in Table 2 that the thickening ratio of the edge portion 220 relative to the main body 210 preferably ranges from 20% to 60%. When the thickening ratio of the edge portion 220 relative to the main body 210 is less than 20%, the separator 10 has insufficient rigidity, and thus the separator 10 is easy to fold during the winding and assembly process; and when the thickening ratio of the edge portion 220 relative to the main body 210 is greater than 60%, the separator 10 has reduced effective bonding area, resulting in a poor bonding effect between the separator 10 and the electrode plate.

As can be seen from the data in Table 3, taking a grid-shaped pattern 230 as an example, separately comparing examples 8, 9, 2, 10 and 11 with comparative example 1, when the width of the edge portion 220 ranges from 10 mm to 20 mm, there are small differences in the elasticity modulus, the K value and the capacity retention rate; when the width of the edge portion 220 is less than 10 mm, as compared with comparative example 1, there is no significant difference in the elasticity modulus, and the folding resistance is poorer; and when the width of the edge portion 220 is greater than 20 mm, the capacity retention rate trends to decrease.

It can be concluded from the data in Table 3 that the width of the edge portion 220 preferably ranges from 10 mm to 20 mm. When the width of the edge portion 220 is greater than 20 mm, the separator 10 has more concentrated local stress and has redundant material consumption; and when the width of the edge portion 220 is less than 10 mm, the separator 10 has insufficient rigidity, and thus the separator 10 is easy to fold during the winding and assembly process.

**Table 3**

| | Type of pattern | Thickening ratio /% | Width /mm | Air permeabili ty of thickened portion /s/100 mL | Elasticity modulus /kgf/cm2 | K value | 500-cycle capacity retention rate |
|---|---|---|---|---|---|---|---|
| Comparative example 1 | None | 0 | 0 | 178 | 573 | 0.01789 | 93.60% |
| Example 8 | Grid | 40 | 5 | 184 | 613 | 0.01626 | 92.90% |
| Example 9 | Grid | 40 | 10 | 189 | 854 | 0.01642 | 93.50% |
| Example 2 | Grid | 40 | 15 | 178 | 928 | 0.01610 | 93.10% |
| Example 10 | Grid | 40 | 20 | 192 | 1003 | 0.01562 | 93.60% |
| Example 11 | Grid | 40 | 50 | 182 | 1151 | 0.01581 | 92.80% |

The above data in Tables 1 to 3 was obtained from the performance tests on the lithium ion batteries, mainly including a self-discharge rate test and a battery capacity retention rate test, which are specifically as follows.

(1) Self-discharge rate test: The self-discharge rate, also known as charge retention capacity, refers to the capacity of retention of electricity stored in the battery under certain conditions when the battery is in an open circuit state. The self-discharge is an important parameter to test the battery performance, and a stable lithium ion battery needs to have a relatively low self-discharge rate.

Taking example 1 as an example, 32 battery samples were charged to 70% SOC, tested after 24 h to obtain battery voltage OCV1, and tested after 48 h to obtain battery voltage OCV2, the battery self-discharge rate being K = (OCV2 - OCV1)/48.

The test processes in the comparative examples and the other examples are the same as that in example 1.

(2) Battery capacity retention rate test: Taking example 1 as an example, at 25°C, the batteries corresponding to example 1 were charged to 4.35 V at constant current of 1/3C, then charged to current of 0.05C at constant voltage of 4.35 V, allowed for standing for 5 min, and then discharged to 2.8 V at current of 1/3C, the obtained capacity being recorded as the initial capacity. The above steps were repeated for a same battery, and the discharge capacity of the battery after 500 cycles was recorded to obtain the corresponding battery capacity retention rate.

The test processes in the comparative examples and the other examples are the same as that in example 1.

Referring to FIG. 1, a lithium ion battery in an embodiment comprises the above separator 10, a positive electrode plate 20 and a negative electrode plate 30, the separator 10 being arranged between the positive electrode plate 20 and the negative electrode plate 30.

Specifically, with reference to FIG. 1, the above lithium ion battery further comprises an insulating layer (not shown) arranged at an edge 21 of the positive electrode plate 20 and/or an edge 31 of the negative electrode plate 30. The insulating layer is provided, thereby reducing the occurrence of internal short circuit caused by the separator 10 being pierced by burrs on the section of the electrode plates.

In a specific embodiment, the insulating layer comprises a binder and a ceramic material, the binder being made of polyvinylidene fluoride, the ceramic material being made of a mixture of alumina and zirconia, and is prepared by mixing the binder and the ceramic material, dissolving the mixture in a terpineol solvent, and drying.

According to some embodiments of the present application, referring to FIGS. 1-4, the present application provides a separator, comprising a base film and a coating which covers a surface of the base film. The coating comprises a main body and an edge portion arranged on the periphery of the main body, the edge portion having a greater thickness than the main body, and the edge portion being provided with several patterns arranged at intervals, the pattern being at least one of a stripe-shaped pattern, a grid-shaped pattern and a pit-shaped pattern. The ratio of the thickness of the edge portion to the thickness of the main body ranges from 1.2 to 1.6, and preferably, the thickness of the edge portion ranges from 4 µm to 8 µm, and the thickness of the main body ranges from 3 µm to 5 µm. The ratio of the width of the edge portion to the width of the main body ranges from 0.17 to 0.33, and preferably, the width of the edge portion ranges from 10 mm to 20 mm, and the width of the main body ranges from 60 mm to 120 mm.

According to some embodiments of the present application, referring to FIG. 1, the present application provides a lithium ion battery comprising a positive electrode plate, a negative electrode plate, the above separator, and an insulating layer, the above separator being arranged between the positive electrode plate and the negative electrode plate, and the insulating layer being arranged at an edge of the positive electrode plate and/or an edge of the negative electrode plate.

The various technical features of the above embodiments can be combined in any manner, and in order to simplify the description, not all possible combinations of the various technical features of the above embodiments are described. However, the technical features should be considered to be within the scope of the description in the specification, as long as there is no conflict between the combinations of the technical features.

The embodiments described above merely illustrate several implementations of the present application and are described relatively specifically and in detail, but should not be construed as limiting the patent scope of the present application. It should be noted that several variations and improvements may also be made by those of ordinary skill in the art without departing from the concept of the present application, and should fall within the scope of protection of the present application. Therefore, the scope of protection of the present application shall be defined by the appended claims.

## Claims

1. A separator (10), **characterized by** comprising:
a base film (100); and
a coating (200) which covers a surface of the base film (100);
wherein the coating (200) comprises a main body (210) and an edge portion (220) arranged on the periphery of the main body (210), the edge portion (220) having a greater thickness than the main body (210), and the edge portion (220) being provided with several patterns (230) arranged at intervals.

2. The separator (10) according to claim 1, **characterized in that** the ratio of the thickness of the edge portion (220) to the thickness of the main body (210) ranges from 1.2 to 1.6.

3. The separator (10) according to either of claims 1-2, **characterized in that** the thickness of the edge portion (220) ranges from 4 µm to 8 µm, and the thickness of the main body (210) ranges from 3 µm to 5 µm.

4. The separator (10) according to any one of claims 1-3, **characterized in that** the ratio of the width of the edge portion (220) to the width of the main body (210) ranges from 0.17 to 0.33.

5. The separator (10) according to any one of claims 1-4, **characterized in that** the width of the edge portion (220) ranges from 10 mm to 20 mm, and the width of the main body (210) ranges from 60 mm to 120 mm.

6. The separator (10) according to any one of claims 1-5, **characterized in that** the edge portion (220) comprises a first edge portion (221) and a second edge portion (222), the first edge portion (221) and the second edge portion (222) being respectively arranged on two sides of the main body (210), and the first edge portion (221) and/or the second edge portion (222) being provided with the several patterns (230) arranged at intervals.

7. The separator (10) according to any one of claims 1-6, **characterized in that** the pattern (230) is at least one of a stripe-shaped pattern, a grid-shaped pattern and a pit-shaped pattern.

8. The separator (10) according to any one of claims 1-7, **characterized in that** the base film (100) comprises a first surface (101) and a second surface (102), and the coating (200) covers the first surface (101) and/or the second surface (102).

9. A lithium ion battery, **characterized by** comprising:
a positive electrode plate (20);
a negative electrode plate (30); and
a separator (10) of any one of claims 1-8 arranged between the positive electrode plate (20) and the negative electrode plate (30).

10. The lithium ion battery according to claim 9, **characterized by** further comprising an insulating layer arranged at an edge of the positive electrode plate (20) and/or an edge of the negative electrode plate (30).
